# EUROPÄISCHE PATENTANMELDUNG

(11) **EP 1 377 004 A1**
(43) Veröffentlichungstag der Anmeldung: **02.01.2004**
(21) Anmeldenummer: 02360184.2
(22) Anmeldetag: 19.06.2002
(51) Int. Cl.: H04M 3/56

(54) **Verfahren zum Aufbau einer Konferenzschaltung zwischen mehreren Teilnehmerendgeräten eines Kommunikationsnetzwerkes**

(71) Anmelder: ALCATEL, 75008 Paris (FR)
(72) Erfinder: Weik, Hartmut, Dipl.-Ing., 70195 Stuttgart (DE); Lautenschlager, Wolfgang, Dipl.-Ing., 71287 Weissach-Flacht (DE)
(74) Vertreter: Dreiss, Fuhlendorf, Steimle & Becker

(57) **Zusammenfassung**

Die Erfindung betrifft ein Verfahren zum Aufbau einer Konferenzschaltung zwischen mehreren Teilnehmerendgeräten (2, 3, 5, 18) eines Kommunikationsnetzwerkes (1, 20). Dabei werden über ein erstes Endgerät (3a) Informationen über die aufzubauende Konferenzschaltung an eine Rechnereinheit (7) übermittelt. Von der Rechnereinheit (7) wird der Aufbau der Konferenzschaltung gesteuert. Außerdem werden durch die Rechnereinheit (7) über eine Vermittlungsstelle (6, 17) des Kommunikationsnetzwerkes (1, 20) Kommunikationsverbindungen zu den an der Konferenzschaltung teilnehmenden Endgeräten (2, 3, 5, 18) aufgebaut und nach erfolgreichem Aufbau der Verbindungen die Verbindungen zu der Konferenzschaltung zusammengeschaltet. Um eine Konferenzschaltung auf möglichst einfache Weise aufbauen zu können und um den Informationsfluss zwischen einem Benutzer (14) des ersten Endgerätes (3a), der die Konferenzschaltung aufbauen möchte, zu fördern, wird vorgeschlagen, dass die Rechnereinheit (7) Teil des ersten Endgerätes (3a) ist und die Funktionen der Rechnereinheit (7) von dem ersten Endgerät (3a) ausgeführt werden.

## Beschreibung

Die vorliegende Erfindung betrifft ein Verfahren zum Aufbau einer Konferenzschaltung zwischen mehreren Teilnehmerendgeräten eines Kommunikationsnetzwerkes. Dabei werden über ein erstes Endgerät Informationen über die aufzubauende Konferenzschaltung an eine Rechnereinheit übermittelt. Von der Rechnereinheit wird der Aufbau der Konferenzschaltung gesteuert und werden über eine Vermittlungsstelle des Kommunikationsnetzwerkes Kommunikationsverbindungen zu den an der Konferenzschaltung teilnehmenden Endgeräten aufgebaut und nach erfolgreichem Aufbau der Verbindungen die Verbindungen zu der Konferenzschaltung zusammenschaltet.

Die Erfindung betrifft außerdem ein auf einem Rechengerät, insbesondere auf einem Mikroprozessor, eines Teilnehmerendgerätes eines Kommunikationsnetzwerkes ablauffähiges Computerprogramm.

Die vorliegende Erfindung betrifft des Weiteren ein Teilnehmerendgerät eines Kommunikationsnetzwerkes, das zum Aufbau einer Konferenzschaltung zwischen mehreren Endgeräten des Kommunikationsnetzwerkes Mittel zur Übermittlung von Informationen über die aufzubauende Konferenzschaltung an eine Rechnereinheit aufweist. Die Rechnereinheit steuert den Aufbau der Konferenzschaltung und baut über eine Vermittlungsstelle des Kommunikationsnetzwerkes Kommunikationsverbindungen zu den an der Konferenzschaltung teilnehmenden Endgeräten auf und schaltet nach erfolgreichem Aufbau der Verbindungen die Verbindungen zu der Konferenzschaltung zusammen.

Die Erfindung betrifft auch eine Rechnereinheit als Teil eines Kommunikationsnetzwerkes, das mehrere Teilnehmerendgeräte und eine Vermittlungsstelle umfasst. Die Rechnereinheit steuert den Aufbau einer Konferenzschaltung zwischen mehreren der Endgeräte, empfängt Informationen über die aufzubauende Konferenzschaltung über ein erstes Endgerät, baut über die Vermittlungsstelle Kommunikationsverbindungen zu den an der Konferenzschaltung teilnehmenden Endgeräten auf und schaltet nach erfolgreichem Aufbau der Verbindungen die Verbindungen zu der Konferenzschaltung zusammen.

Schließlich betrifft die vorliegende Erfindung ein Kommunikationsnetzwerk umfassend mehrere Teilnehmerendgeräte, eine Rechnereinheit und eine Vermittlungsstelle. Die Rechnereinheit steuert den Aufbau einer Konferenzschaltung zwischen mehreren der Endgeräte, empfängt Informationen über die aufzubauende Konferenzschaltung über ein erstes Endgerät, baut über die Vermittlungsstelle Kommunikationsverbindungen zu den an der Konferenzschaltung teilnehmenden Endgeräten auf und schaltet nach erfolgreichem Aufbau der Verbindungen die Verbindungen zu der Konferenzschaltung zusammen.

Es ist bekannt, in Kommunikationsnetzwerken mehrere Teilnehmerendgeräte zu einer Konferenzschaltung zusammenzuschalten. Dabei kann es sich um eine Audio- und/oder Video-Konferenzschaltung handeln. Über die Konferenzschaltung können die Benutzer der an der Konferenzschaltung teilnehmenden Endgeräte untereinander Informationen austauschen. Es können praktisch jegliche Art von Informationen ausgetauscht werden, die auch bei einer herkömmlichen Besprechung, bei der sich die Teilnehmer an einem gemeinsamen Ort persönlich gegenüber sitzen, ausgetauscht werden. Der Vorteil einer Konferenzschaltung besteht darin, dass die Teilnehmer über die ganze Welt verstreut und lediglich über das Kommunikationsnetzwerk untereinander verbunden sind und dennoch untereinander Informationen jeglicher Art austauschen können. Aufgrund der dadurch nicht anfallenden Reise und Unterbringung der Teilnehmer sowie aufgrund der nicht notwendigen Bereitstellung eines geeigneten Orts für die Besprechung können Zeit und Kosten eingespart werden.

Nach dem Stand der Technik ist das Kommunikationsnetzwerk entweder als ein digitales Tele-Kommunikationsnetzwerk oder als ein IP (Internet Protocol)-Kommunikationsnetzwerk ausgebildet. Allgemein gesagt, erfolgt der Austausch von Informationen zwischen den Teilnehmern an der Konferenzschaltung im Rahmen einer Echtheit-Kommunikation oder im Rahmen einer paketorientierten Datenübertragung. Dementsprechend sind die Teilnehmerendgeräte als herkömmliche digitale Telefonapparate, als sog. Comfort-Telefone mit einer gegenüber den herkömmlichen Telefonapparaten erweiterten Funktionalität, welche auch die IP-Telefonie umfassen kann, oder als Rechnergeräte, insbesondere als PCs (Personal Computer) ausgebildet, welche über eine entsprechende Hardware und Software verfügen, um einen Informationsaustausch im Rahmen einer Echtzeit-Kommunikation oder einer paketorientierten Datenübertragung zu ermöglichen.

Eine Konferenzschaitung wird nach dem Stand der Technik wie folgt aufgebaut. Ein Benutzer eines ersten Teilnehmerendgerätes, welcher den Aufbau der Konferenzschaltung initiieren möchte, gibt über das Endgerät Informationen über die aufzubauende Konferenzschaltung ein. Diese Informationen werden dann über das Kommunikationsnetzwerk an eine Rechnereinheit des Netzwerks übermittelt. Die Informationen über die aufzubauende Konferenzschaltung umfassen bspw. das Datum und die Uhrzeit einer geplanten Konferenzschaltung, Identifikationsnummern der an der Konferenzschaltung teilnehmenden Endgeräte (insbesondere Telefonnummer oder IP-Adressen) und/oder Namen der an der Konferenzschaltung teilnehmenden Personen und Art der für die Konferenzschaltung aufzubauenden Kommunikationsverbindungen.

Die Rechnereinheit steuert anhand der von dem ersten Endgerät erhaltenen Informationen den Aufbau der Konferenzschaltung. Die Rechnereinheit übermittelt entsprechende Ansteuersignale an eine Vermittlungsstelle des Kommunikationsnetzwerkes, damit diese die entsprechenden Kommunikationsverbindungen zu den an der Konferenzschaltung teilnehmenden Endgeräten aufbaut und nach erfolgreichem Aufbau der Verbindungen die Verbindungen zu der Konferenzschaltung zusammenschaltet. Die Rechnereinheit ist als ein eigenständiger Server oder als Teil der Vermittlungsstelle in dem Kommunikationsnetzwerk und zwar völlig unabhängig von den Teilnehmerendgeräten ausgebildet. Nach dem Stand der Technik dient das erste Endgeräte lediglich als Benutzerschnittstelle zwischen dem Teilnehmer, welcher die Konferenzschaltung initiiert, und der Rechnereinheit, welche den Aufbau der Konferenzschaltung steuert.

Bei dem bekannten Verfahren ist es nachteilig, dass zum Aufbau der Konferenzschaltung eine gesonderte Rechnereinheit vorgesehen werden muss. Aufgrund der räumlichen Entfernung zwischen Rechnereinheit und erstem Teilnehmerendgerät, das den Aufbau der Konferenzschaltung initiiert, ist der Informationsfluss zwischen der Rechnereinheit und dem ersten Endgerät, insbesondere hinsichtlich Informationen bezüglich des Status des Aufbaus der Kommunikationsverbindungen zu den an der Konferenzschaltung teilnehmenden Endgeräten, nur unzureichend. Der Teilnehmer, auf dessen Initiative die Konferenzschaltung zurückgeht, hat zudem nur wenig Einflussmöglichkeiten auf den von der Rechnereinheit gesteuerten Verbindungsaufbau. Bei dem Stand der Technik ergeben sich also Defizite hinsichtlich der Überwachung und der Steuerung des Aufbaus der Konferenzschaltung.

Der vorliegenden Erfindung liegt deshalb die Aufgabe zugrunde, den Aufbau einer Konferenzschaitung insgesamt und hinsichtlich der Überwachung und der Steuerung des Aufbaus der Konferenzschaltung zu verbessern. Insbesondere soll der Teilnehmer, der die Konferenzschaltung initiiert, mit umfangreichen Informationen betreffend den Status des Aufbaus der Kommunikationsverbindungen zu den an der Konferenzschaltung teilnehmenden Endgeräten versorgt werden können und soll dem Teilnehmer die Möglichkeit gegeben werden, in den von der Rechnereinheit gesteuerten Verbindungsaufbau aktiv eingreifen zu können.

Zur Lösung dieser Aufgabe schlägt die vorliegende Erfindung ausgehend von dem Verfahren zum Aufbau einer Konferenzschaltung der eingangs genannten Art vor, dass die Rechnereinheit Teil des ersten Endgerätes ist und die Funktionen der Rechnereinheit von dem ersten Endgerät ausgeführt werden.

Gemäß der vorliegenden Erfindung wird also der Aufbau der Konferenzschaltung nicht mehr von einer getrennt von dem Endgerät ausgebildeten Rechnereinheit, sondern vielmehr von dem ersten Endgerät selbst gesteuert. Dazu ist in dem ersten Endgerät entweder eine zusätzliche Rechnereinheit vorgesehen oder aber eine für andere Zwecke bereits in dem Endgerät vorhandene Rechnereinheit wird zur Steuerung des Aufbaus der Konferenzschaltung herangezogen. In dem ersten Fall muss das erste Endgerät sowohl mit geeigneter Hardware als auch entsprechender Software zur Steuerung des Aufbaus der Konferenzschaltung ausgestattet werden. In dem zweiten Fall genügt es, wenn eine zusätzliche Software vorgesehen wird, die auf der bereits vorhandenen Rechnereinheit abläuft und zur Steuerung des Aufbaus der Konferenzschaltung dient.

Ein wesentlicher Aspekt der vorliegenden Erfindung ist also darin zu sehen, dass die Rechnereinheit zur Steuerung des Aufbaus der Konferenzschaltung nicht mehr wie bisher über das Kommunikationsnetzwerk von dem ersten Endgerät mit Informationen über die aufzubauende Konferenzschaltung versorgt werden muss. Stattdessen werden diese Informationen unmittelbar in dem ersten Endgerät an die interne Rechnereinheit weitergeleitet und dort verarbeitet. Dadurch ergeben sich zum einen deutlich verkürzte Übertragungszeiten von der Eingabe der Informationen über die aufzubauende Konferenzschaltung durch den Teilnehmer zu dem Rechengerät und zum anderen können nahezu beliebig große Bandbreiten ohne großen Aufwand realisiert werden. Dadurch kann der Informationsfluss zwischen der Rechnereinheit, welche den Aufbau der Konferenzschaltung steuert, und dem Teilnehmer über das erste Endgerät deutlich verbessert werden. Der Teilnehmer kann zum einen mit wesentlich umfangreicheren Informationen über den Stand des Aufbaus der Konferenzschaltung versorgt werden. Zum anderen können aufgrund der räumlichen Nähe zwischen dem Endgerät als Schnittstelle zwischen dem Teilnehmer und der Rechnereinheit einerseits und der Rechnereinheit andererseits Funktionalitäten realisiert werden, die es dem Teilnehmer ermöglichen, umfangreichen Einfluss auf den Aufbau der Konferenzschaltung zu nehmen. Die zusätzlichen Funktionalitäten können bei der vorliegenden Erfindung ohne großen Aufwand realisiert werden.

Gemäß einer vorteilhaften Weiterbildung der vorliegenden Erfindung wird vorgeschlagen, dass die Kommunlkationsverbindungen zu den an der Konferenzschaltung teilnehmenden Endgeräten von dem ersten Endgerät parallel aufgebaut werden. Demnach baut das erste Endgerät die Kommunikationsverbindungen also zeitgleich oder zumindest quasi-zeitgleich auf. Das setzt voraus, dass das erste Endgerät über eine ausreichend dimensionierte Verbindung, d.h. über eine Verbindung, die eine ausreichende Bandbreite ermöglicht, mit dem Kommunikationsnetzwerk in Verbindung steht. So können bspw. über einen ISDN (Integrated Services Digital Network)-Basisanschluss über die beiden B-Kanäle mit einer Übertragungsrate von jeweils 64 kbit parallel zwei Verbindungen zu zwei Endgeräten des Kommunikationsnetzwerkes aufgebaut werden. Falls das erste Endgerät, welches die Konferenzschaltung initiiert und deren Aufbau steuert, über einen ISDN-Primärmultiplexanschluss an das Kommunikationsnetzwerk angeschlossen ist, können über die 30 B-Kanäle mit jeweils 64 kbit sogar Verbindungen zu 30 Endgeräten parallel aufgebaut werden. Denkbar ist auch ein Zugang in ein IP (Internet Protocol)-basiertes Kommunikationsnetzwerk direkt über einen IP-Telefonapparat. Dabei ist der IP-Telefonapparat bspw. an ein LAN (Local Area Network) angeschlossen, das wiederum mit dem IP-Kommunikationsnetzwerk in Verbindung steht.

Durch den parallelen Verbindungsaufbau kann insbesondere bei Konferenzschaltung mit einer größeren Anzahl an teilnehmenden Endgeräten eine erhebliche Zeitersparnis erzielt werden. Zudem ergibt sich ein Komfortgewinn für die Teilnehmer an der Konferenzschaltung, weil die Kommunikationsverbindungen zu allen teilnehmenden Endgeräten nahezu gleichzeitig aufgebaut werden und die Teilnehmer, zu denen die Verbindung bereits aufgebaut ist, deshalb nur noch kurze Zeit warten müssen, bis die Verbindungen zu den übrigen Teilnehmern aufgebaut und alle Teilnehmer zu der Konferenzschaltung hinzugeschaltet sind.

Gemäß einer bevorzugten Ausführungsform der vorliegenden Erfindung wird vorgeschlagen, dass die Funktionen der Rechnereinheit nach dem SIP (Session Initiation Protocol)-Standard ausgeführt werden. Das SIP-Protokoll ist ein von der Internet Engineering Task Force (IETF) vorgeschlagener Standard für ein Signalisierungsprotokoll, das Sitzungen mit zwei und mehr Teilnehmern aufbauen, modifizieren und beenden kann. Dieses textorientierte Protokoll, das auf HTTP (Hypertext Transport Protocol) basiert, dient der Übertragung von Echtzeitdaten über paketorientierte Kommunikationsnetzwerke. Die SIP-Informationen können über TCP (Transmission Control Protocol) oder UDP (User Datagram Protocol) transportiert werden. SIP besitzt eine offene internetbasierte Struktur und ermöglicht vergleichbare oder erweiterte Funktionalitäten wie CLASS (Custom Local Area Signalling Service), wie etwa die Übermittlung der Identität des Anrufers oder eine Anrufweiterleitung in IP-basierten Kommunikationsnetzwerken. Durch die offene Struktur können neue Funktionsmerkmale schneller und einfacher implementiert werden als bei dem konventionellen Standard-Telefonsystem (PSTN) (Public Switched Telephone Network). SIP ist verantwortlich für die Gesprächssignalisierung, das Lokalisieren von Anwendern und die Registrierung. Die Dienstgüte, Verzeichniszugrilfe und die Sitzungsprozeduren werden von anderen Protokollen übernommen. SIP wird in dem RFC (Request for Comments; TCP/IP-Standarddokument) 2543 beschrieben.

Vorteilhafterweise wird der Status des Aufbaus der Verbindungen zu den an der Konferenzschaitung teilnehmenden Endgeräten an das erste Endgerät rückgemeldet.

Es wird des Weiteren vorgeschlagen, dass nach einem erfolgreichen Verbindungsaufbau über das erste Endgerät entschieden wird, ob jedes verbundene Endgerät abgewiesen oder zu der Konferenzschaltung hinzugeschaitet werden soll.

Vorzugsweise erfolgt die Rückmeldung über den Status des Aufbaus der Verbindung und/oder die Ablehnung oder Aufnahme eines Endgeräts, zu dem eine erfolgreiche Verbindung aufgebaut wurde, in die Konferenzschaltung über eine menügesteuerte grafische Benutzeroberfläche des ersten Endgeräts. Auf einer solchen grafischen Benutzeroberfläche können einerseits dem Benutzer des ersten Endgeräts Informationen über den Status des Aufbaus der Verbindungen zu den an der Konferenzschaltung teilnehmenden Endgeräten übersichtlich und leicht verständlich präsentiert werden. Andererseits stellt die menügesteuerte grafische Benutzeroberfläche aber auch einen einfachen und bequemen Weg für den Benutzer dar, um in den Aufbau der Konferenzschaltung eingreifen zu können.

Von besonderer Bedeutung ist die Realisierung des erfindungsgemäßen Verfahrens in der Form eines Computerprogramms, das für ein Teilnehmerendgerät eines Kommunikationsnetzwerkes vorgesehen ist. Das Teilnehmerendgerät kann als ein digitales Telekommunikationsendgerät für eine Echtzeit-Kommunikation oder für eine paketorientierten Datenübertragung oder als ein Computer, vorzugsweise als ein PC (Personal Computer), mit geeigneter Hardware und Software für eine paketorientierten Datenübertragung ausgebildet sein. Das Computerprogramm ist auf einem Rechengerät, insbesondere auf einem Mikroprozessor, des ersten Endgeräts ablauffähig und zur Ausführung des erfindungsgemäßen Verfahrens geeignet. In diesem Fall wird also die Erfindung durch das Computerprogramm realisiert, so dass das Computerprogramm in gleicher Weise die Erfindung darstellt wie das Verfahren, zu dessen Ausführung es geeignet ist. Besonders bevorzugt ist dabei, wenn das Computerprogramm auf einem Speicherelement, insbesondere auf einem Read-Only-Memory, einem Random-Access-Memory oder auf einem Flash-Memory abgespeichert ist. Das Speicherelement ist vorzugsweise Teil des Endgeräts. Als Speicherelemente kommen jedoch auch jede Art von Speichermedien, insbesondere Festplatten oder externe Speichermedien, wie bspw. Disketten, CD-ROMs, DVDs, MDs o.a., in Betracht.

Als eine weitere Lösung der Aufgabe der vorliegenden Erfindung wird ausgehend von dem Teilnehmerendgerät eines Kommunikationsnetzwerks der eingangs genannten Art vorgeschlagen, dass die Rechnereinheit Teil des Endgeräts ist, welches den Aufbau der Konferenzschaltung initiiert, und das Endgerät die Funktionen der Rechnereinheit zur Steuerung des Aufbaus der Konferenzschaltung ausführt. Das erfindungsgemäße Teilnehmerendgerät hat den Vorteil, dass sämtliche für den Aufbau der Konferenzschaltung erforderlichen Komponenten und Funktionseinheiten in dem Endgerät selbst enthalten sind. Für den Informationsaustausch zwischen dem Endgerät und der Rechnereinheit bzw. der Vermittlungsstelle ist eine häufig langsam und bandbreitenmäßig beschränkte Informationsübertragung über das Kommunikationsnetzwerk nicht mehr erforderlich. Aufgrund der Integration der Funktionen der Rechnereinheit zur Steuerung des Aufbaus der Konferenzschaltung ist es ohne großen Aufwand möglich, zusätzliche Funktionalitäten betreffend den Aufbau einer Konferenzschaltung zu realisieren. Diese zusätzlichen Funktionalitäten betreffen bspw. die Ausgabe von Informationen über den Stand des Aufbaus der Kommunikations verbindungen zu den an der Konferenzschaltung teilnehmenden Endgeräten an das den Aufbau der Konferenzschaltung initiierende Endgerät oder einen aktiven Eingriff des Teilnehmers des initiierenden Endgeräts in die Steuerung des Aufbaus der Konferenzschaltung.

Gemäß einer vorteilhaften Weiterbildung der vorliegenden Erfindung wird vorgeschlagen, dass das die Konferenzschaltung initiierende Endgerät Teil eines digitalen Telekommunikationsnetzwerks, vorzugsweise eines Telekommunikationsnetzwerkes nach dem ISDN (Integrated Services Digital Network)-Standard, ist. Vorzugsweise steht das initiierende Endgerat über einen ISDN-Basisanschluss mit dem Kommunikationsnetzwerk in Verbindung. Alternativ wird vorgeschlagen, dass das initiierende Endgerät über einen ISDN-Primärmultiplexanschluss mit dem Kommunikationsnetzwerk in Verbindung steht.

Gemäß einer bevorzugten Ausführungsform der vorliegenden Erfindung wird vorgeschlagen, dass das die Konferenzschaltung initiierende Endgerät Teil eines digitalen Telekommunikationsnetzwerkes, vorzugsweise eines Telekommunikationsnetzwerkes nach dem PBX (Private Branch Exchange)-Standard, ist.

Gemäß noch einer anderen bevorzugten Ausführungsform der vorliegenden Erfindung wird vorgeschlagen, dass das die Konferenzschaltung initiierende Endgerät Teil eines IP (Internet Protocol)-Kommunikationsnetzwerkes ist.

Schließlich wird vorgeschlagen, dass das die Konferenzschaltung initiierende Endgerät eine menügesteuerte grafische Benutzeroberfläche als Schnittstelle zu einem Benutzer des initiierenden Endgerätes aufweist. Über die grafische Benutzeroberfläche können Informationen besonders verständlich und übersichtlich an den Benutzer des Endgeräts ausgegeben werden. Zudem bietet die menhgesteuerte grafische Benutzeroberfläche dem Benutzer des initiierenden Endgeräts eine einfache und leicht verständliche Möglichkeit, in die Steuerung des Aufbaus der Konferenzschaltung einzugreifen.

Als noch eine weitere Lösung der Aufgabe der vorliegenden Erfindung wird ausgehend von der Rechnereinheit der eingangs genannten Art vorgeschlagen, dass die Rechnereinheit Teil des die Konferenzschaltung initiierenden Endgerätes ist und das initiierende Endgerät die Funktionen der Rechnereinheit zur Steuerung des Aufbaus der Konferenzschaltung ausfuhrt.

Schließlich wird als noch eine weitere Lösung der Aufgabe der vorliegenden Erfindung ausgehend von dem Kommunikationsnetzwerk der eingangs genannten Art vorgeschlagen, dass die Rechnereinheit Teil des die Konferenzschaltung initiierenden Endgerätes ist und das initiierende Endgerät die Funktionen der Rechnereinheit zur Steuerung des Aufbaus der Konferenzschaltung ausführt.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsoemäßes Kommunikationsnetzwerk gemäß einer ersten bevorzugten Ausführungsform,
- Figur 2: ein erfindungsgemäßes Kommunikationsnetzwerk gemäß einer zweigen bevorzugten Ausfuhrungsform; und
- Figur 3: ein erfindungsgemäßes Teilnehmerendgerät gemäß einer bevorzugten Ausführungsform.

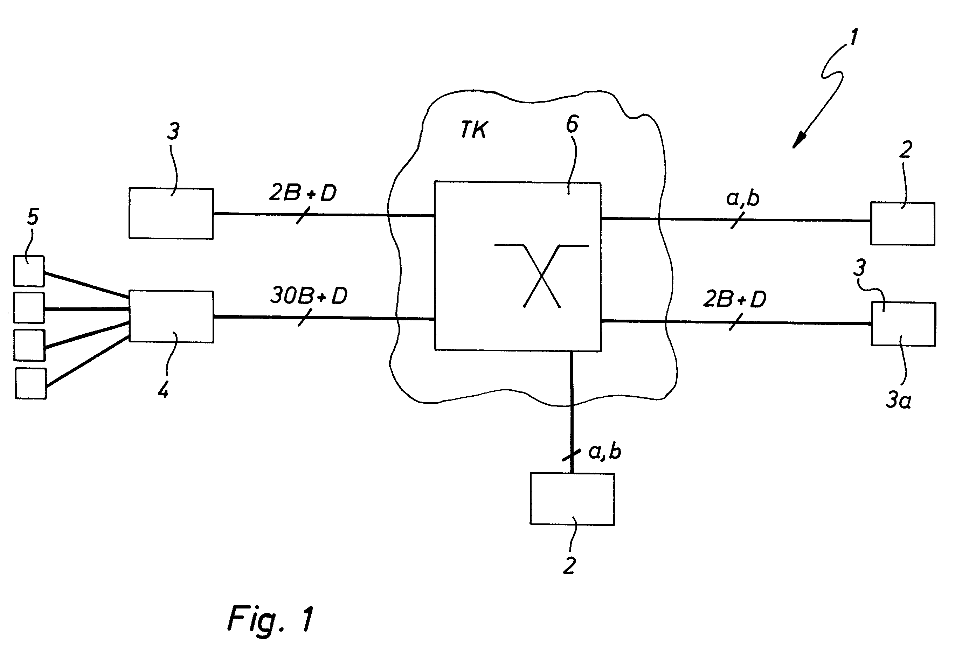

In Fig. 1 ist ein erfindungsgemäßes Kommunikationsnetzwerk gemäß einer ersten bevorzugten Ausfuhrungsform in seiner Gesamtheit mit dem Bezugszeichen 1 bezeichnet. Das Kommunikationsnetzwerk 1 ist als ein digitales Telekommunikationsnetzwerk, vorzugsweise nach dem ISDN (Integrated Services Digital Network)-Standard, ausgebildet. An das ISDN-Netzwerk 1 sind verschiedene Teilnehmerendgeräte 2, 3, 5 angeschlossen. Die Endgeräte 2 sind als herkömmliche analoge Telefone ausgebildet. Die Endgeräte 3 sind als digitale Telefone ausgebildet, die über einen ISDN-Basisanschluss mit zwei Nutzkanälen (sog. B-Kanäle) und einem Steuerkanal (sog. D-Kanal) an das ISDN-Netzwerk 1 angeschlossen sind. Die Endgeräte 5 sind über einen Telekommunikationsserver 4 an das IuON-hetzweiK 1 angeschlossen. Der Server 4 ist über einen ISDN-Primärmultiplexanschluss mit 30 Nutzkanälen und einem Steuerkanal an das ISDN-Netzwerk 1 angeschlossen ist. An den Server 4 sind die Telekommunikationsendgeräte 5 angeschlossen, welche über den Server 4 Zugang zu dem ISDN-Netzwerk 1 haben. Selbstverständlich können statt der digitalen Endgeräte 3, 5 auch entsprechende Rechengeräte, insbesondere PCs (Personal Computer), eingesetzt werden, die mit einer geeigneten Hardware und Software ausgestattet sind, damit sie zur Informationsübermittlung über das ISDN-Metzwerk über die ISDN-Anschlüsse eingesetzt werden können.

Zwischen mehreren Teilnehmerendgeräten 2, 3, 4 bzw. 5 kann eine Konferenzschaltung zum Austausch von Audlo- und/oder Video-Informationen zwischen den beteiligten Endgeräten aufgebaut werden. Dazu werden über eine Vermittlungsstelle 6 des ISDN-Netzwerks 1 Kommunikationsverbindungen zu den an der Konferenzschaltung teilnehmenden Endgeräten 2, 3, 5 aufgebaut und nach erfolgreichem Aufbau der Verbindungen die Verbindungen zu der Konferenzschaltung zusammengeschaltet. Der Aufbau der Konferenzschaltung wird von einer Rechnereinheit gesteuert.

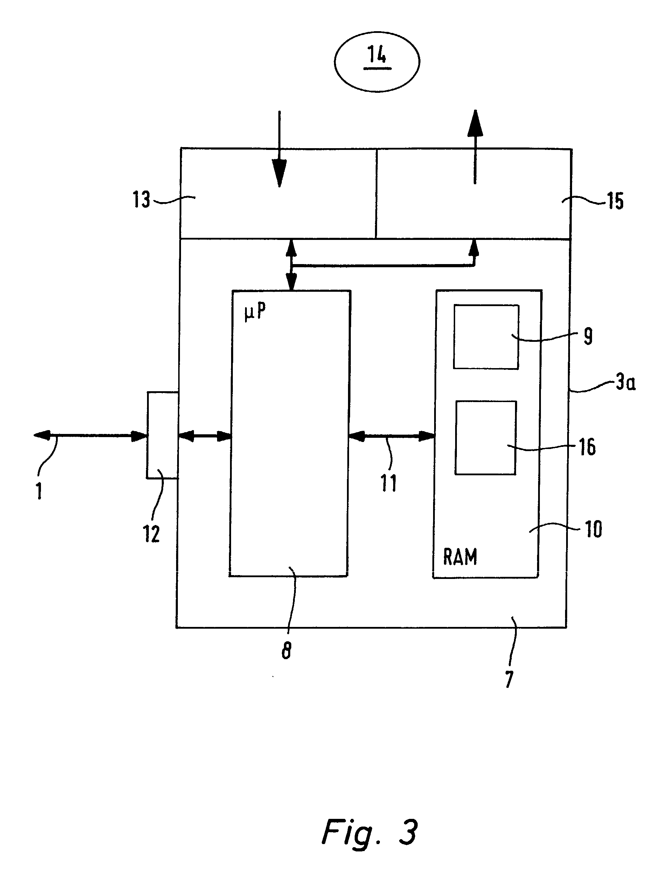

Der Kern der vorliegenden Patentanmeldung ist darin zu sehen, dass die Rechnereinheit Teil eines ersten Endgerätes 3a ist, über welches ein Benutzer des Endgerätes 3a den Aufbau der Konferenzschaltung initiiert. In Fig. 3 ist das erste Endgerät 3a im Detail dargestellt. Die Rechnereinheit zur Steuerung des Aufbaus der Konferenzschaltung ist in ihrer Gesamtheit mit dem Bezugszeichen 7 bezeichnet. Die Rechnereinheit 7 umfasst ein Rechengerät 8, insbesondere einen Mikroprozessor, auf dem ein Computerprogramm 9 zur Realisierung des erfindungsgemäßen Verfahrens ablauffähig ist. Das Computerprogramm 9 ist auf einem Speicherelement 10, insbesondere auf einem Flash-Memory oder in einem PC (Personal Computer') auf einer Festplatte, abgespeichert. Zur Abarbeitung des Computerprogramms 9 wird dieses über eine Datenverbindung 11 entweder als Ganzes oder abschnittsweise über eine Datenverbindung 11 an das Rechengerät 8 übermittelt. Umgekehrt können Ergebnisse von Berechnungen, die auf dem Rechengerät 8 ausgeführt werden, oder über das ISDN-Netzwerk 1 an das Endgerät 3a übertragene Informationen über die Datenverbindung 11 an das Speicherelement 10 übertragen und dort abgespeichert werden. Das erste Endgerät 3a ist über einen Ko-mmunhkatlonscontroller 12 an das ISDN-Netzwerk 1 angeschlossen.

Das Endgerät 3a verfügt über eine Eingabeschnittstelle 13, die bspw. als eine Tastatur oder als eine Sprachschnittstelle ausgebildet ist, über welche ein Benutzer 14 Befehle zum Aufbau einer Kommunikationsverbindung oder zum Aufbau einer Konferenzschaltung in das erste Endgerät 3a eingegeben kann. Des weiteren verfügt das Endgerät 3a über eine Ausgabeschnittstelle 15, über welche Informationen an den Benutzer 14 ausgegeben werden können. Die Ausgabeschnittstelle 15 ist im einfachsten Fall als ein Lautsprecher ausgebildet, über den Audio-Informationen an den Benutzer 14 ausgegeben werden können. Erfindungsgemäß wird vorgeschlagen, dass die Ausgabeschnittstelle 15 als ein Bildschirm ausgebildet ist, über den Video-Informationen an den Benutzer 14 ausgegeben werden können. Die Eingabe durch den Benutzer 14 und die Ausgabe der Informationen an den Benutzer 14 kann über eine menügeführte grafische Benutzeroberfläcne, die auf dem Bildschirm dargestellt ist, besonders einfach und übersichtlich erfolgen. Die Eingabeschnittstelle 13 und die Ausgabeschnittstelle 15 lassen sich in Form eines berührungssensitiven Bildschirms miteinander verknüpfen.

Die Rechnereinheit 7 zur Steuerung des Aufbaus der Kommunikationsverbindung kann als eine gesonderte Rechnereinheit innerhalb des Endgerätes 3a ausgebildet sein. Bei einem herkömmlichen digitalen Telekommunikationsendgerät 3, 5 ist zur Realisierung der bestimmungsgemäßen Funktion (Aufbau einer Kommunikationsverbindung zu einem bestimmten Gesprächspartner; Empfang und Annahme einer Kommunikationsverbindung, etc.) bereits eine Rechnereinheit mit einem Rechengerät 8 und einem Speicherelement 10. vorgesehen. Zur Realisierung der bestimmungsgemäßen Funktion ist auf dem Speicherelement 10 ein weiteres Computerprogramm 16 abgespeichert, das auf dem Rechengerät 8 ablauffähig ist. Zusätzlich zu dem weiteren Computerprogramm 16 wird das erfindungsgemäße Computerprogramm 9 auf dem Speicherelement 10 abgelegt, das zur Ausführung des erfindungsgemäßen Verfahrens geeignet ist.

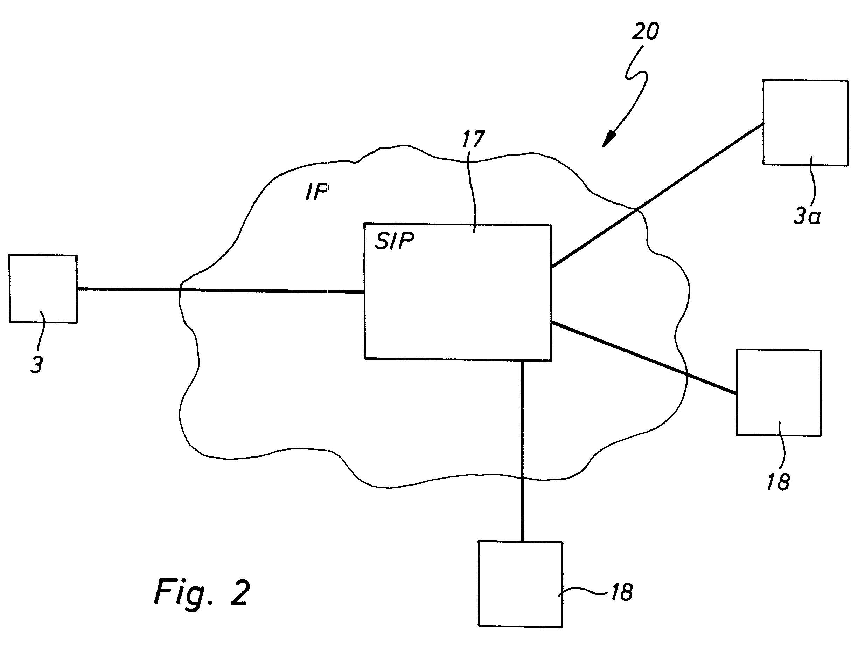

In Fig. 2 ist ein anderes erfindungsgemäßes Kommunikationsnetzwerk gemäß einer zweiten bevorzugten Ausführungsform in seiner Gesamtheit mit dem Bezugszeichen 20 bezeichnet. Dabei ist das Kommunikationsnetzwerk 20 als ein IP (Internet Protocol)-Netzwerk ausgebildet. Das IP-Netzwerk 20 umfasst mindestens einen SIP (Session Initiation Protocol)-Proxyserver 17, über welchen Funktionalitäten nach dem SIP-Protokoll, insbesondere der Aufbau von Kommunikationsverbindungen mit zwei und mehr Teilnehmern, ausgeführt werden. Gemäß dieser Ausführungsform ist also die Vermittlungsstelle des Kommunikationsnetzwerks als der SIP-Proxyserver 17 ausgebildet.

Über geeignete Kommunikationscontroller 12 (vgl. Figur 3) sind Endgeräte 3, 18 an das IP-Netzwerk 20 angeschlossen. Die Endgeräte 3 sind als digitale Telefonapparate, vorzugsweise als IP-Telefonapparate, ausgebildet, die über ein geeignete Hardware und Software verfügen, damit sie zur Informationsübertragung über das IP-Netzwerk 20, insbesondere zur IP-Telefonie (sog. Voice over IP;. VoIP) geeignet sind. Die Endgeräte 18 sind als PCs ausgebildet, die ebenfalls mit einer geeigneten Hardware und Software ausgestattet sind, damit sie zur Informationsübertragung über das IP-Netzwerk 20 geeignet sind. Die Endgeräte 3, 18 sind vorzugsweise über Verbindungen mit einer großen Übertragungsrate an das IP-Netzwerk 1 angeschlossen. Diese Verbindungen sind bspw. als xDSL (x Digital Subscriber Line)-Verbindungen, als Kabelnetze (HFC, Hybrid Fibre Coax) oder als direkte IP-Zugänge über ein LAN (Local Area Network) ausgebildet. Eine x-DSL-Verbindung umfasst verschiedene DSLs (DigitaL Subscriber Lines) insbesondere Asymmetric (ADSL), High Bit Rate (HDSL)und Very High Speed (VDSL) Digital Subscriber Lines.

Statt des SIP-Proxyservers 17 kann in dem ID-Netzwerk 20 auch ein H.323-Gatekeeper vorgesehen sein. In diesem Fall wäre also die Vermittlungssteile als der H.323-Gatekeeper ausgebildet und die Funktionen der Rechnereinheit 7 würden nicht nach dem SIP-Standard, sondern nach dem H.323-Standard ausgeführt werden.

Zum Aufbau einer Konferenzschaltung über das erste Endgerät 3a werden die nachfolgenden Verfahrensschritte ausgeführt: Der Benutzer 14 gibt über die Eingabeschnittstelle 13 Informationen über die aufzubauende Konferenzschaltung in das Endgerät 3a ein. Die Informationen werden von der Eingabeschnittsteile 13 weiter an die Rechnereinheit 7 übermittelt und dort verarbeitet. Die Steuerung des Aufbaus der Konferenzschaltung durch die Rechnereinheit 7 erfolgt in Abhängigkeit der durch den Benutzer 14 eingegebenen Informationen. Insbesondere werden über eine Vermittlungsstelle 6, 17 des Kommunikationsnetzwerkes 1, 20 Kommunikationsverbindungen zu denjenigen Endgeräten 2, 3, 5, 18 aufgebaut, die gemäß den eingegebenen Informationen an der Konferenzschaltung teilnehmen sollen. Selbstverständlich ist es auch möglich, dass die Konferenzschaltung über gemischte Netze aufgebaut wird. In diesem Fall werden bspw. die Kommunikationsverbindungen von dem ersten Endgerät 3a zu den teilnehmenden Endgeräten 2, 3, 5 teilweise uber ein Telekommunikationsnetzwerk und teilweise über ein IP-Kommunikationsnetzwerk aufgebaut. Nach erfolgreichem Aufbau der Verbindungen werden diese durch die Rechnereinheit 7 zu der Konferenzschaltung zusammengeschaltet.

Der Aufbau der Kommunikationsverbindungen von dem ersten Endgerät 3a zu den übrigen teilnehmenden Endgeräten 2, 3, 5, 18 erfolgt vorzugsweise parallel, also zeitgieich bzw. guasizeitgleich zueinander. Der Status des Aufbaus der Verbindungen zu den teilnehmenden Endgeräten 2, 3, 5, 18 wird von der Rechnereinheit 7 an das erste Endgerät 3a bzw. genauer gesagt an die Ausgabeschnittstelle 15 rückgemeldet, so dass der Benutzer 14 stets über den Stand des Aufbaus der Konferenzschaltung informiert ist.

Nach einem erfolgreichen Verbindungsaufbau zu einem teilnehmenden Endgerät 2, 3, 5, 18 wird dem Benutzer 14 über die Ausgabeschnittstelle 15 eine entsprechende Meldung ausgegeben. Über die Eingabeschnittstelle 13 kann der Benutzer 14 dann entscheiden, ob das verbundene Endgerät 2, 3, 5, 18 zu der Konferenzschaltung hinzugeschaltet oder abgewiesen werden soll.

## Patentansprüche

1. Verfahren zum Aufbau einer Konferenzschaltung zwischen mehreren Teilnehmerendgeräten (2, 3, 5, 18) eines Kommunikationsnetzwerkes (1, 20), bei dem über ein erstes Endgerät (3a) Informationen über die aufzubauende Konferenzschaltung an eine Rechnereinheit (7) übermittelt werden, wobei von der Rechnereinheit (7) der Aufbau der Konferenzschaltung gesteuert wird und über eine Vermittlungsstelle (6, 17) des Kommunikationsnetzwerkes (1, 20) Kommunikationsverbindungen zu den an der Konferenzschaltung teilnehmenden Endgeräten (2, 3, 5, 18) aufgebaut und nach erfolgreichem Aufbau der Verbindungen die Verbindungen zu der Konferenzschaltung zusammengeschaltet werden, **dadurch gekennzeichnet, dass** die Rechnereinheit (7) Teil des ersten Endgerätes (3a) ist und die Funktionen der Rechnereinheit (7) von dem ersten Endgerät (3a) ausgeführt werden.

2. Verfahren nach Anspruch 1, **dadurch gekennzeichnet, dass** die Kommunikationsverbindungen zu den an der Konferenzschaltung teilnehmenden Endgeräten (2, 3, 5, 18) von dem ersten Endgerät (3a) parallel aufbaut werden.

3. Verfahren nach Anspruch 1 oder 2, **dadurch gekennzeichnet, dass** die Funktionen der Rechnereinheit (7) nach dem SIP (Session Initiation Protocol)-Standard ausgerührt werden.

4. Verfahren nach einem der Ansprüche 1 bis 3, **dadurch gekennzeichnet, dass** der Status des Aufbaus der Verbindungen zu den an der Konferenzschaltung teilnehmenden Endgeräten (2, 3, 5, 18) an das erste Endgerät (3a) rückgemeldet wird.

5. Verfahren nach Anspruch 4, **dadurch gekennzeichnet, dass** nach einem erfolgreichen Verbindungsaufbau über das erste Endgerät (3a) entschieden wird, ob jedes verbundene Endgerät (2, 3, 5, 18) abgewiesen werden oder an der Konferenzschaltung teilnehmen soll.

6. Verfahren nach Anspruch 4 oder 5, **dadurch gekennzeichnet, dass** die Rückmeldung über den Status des Aufbaus der Verbindungen und/oder die Ablehnung oder die Aufnahme eines Endgeräts (2, 3, 5, 18) in die Konferenzschaltung, zu dem eine erfolgreiche Verbindung aufgebaut wurde, über eine menugesteuerte grafische Benutzeroberfläche des ersten Endgeräts (3a) erfolgt.

7. Auf einem Rechengerät (8), insbesondere auf einem Mikroprozessor, eines Teilnehmerendgerätes (3a) eines Kommunikationsnetzwerkes (1, 20) ablauffähiges Computerprogramm (9), **dadurch gekennzeichnet, dass** das Computerproqramm (9) zur Ausführung eines Verfahrens nach einem der Ansprüche 1 bis 6 geeignet ist, wenn es auf dem Rechengerät (8) abläuft.

8. Computerprogramm (9) nach Anspruch 7, **dadurch gekennzeichnet, dass** das Computerprogramm (9) auf einem Speicherelement (10), insbesondere auf einem Read-Only-Memory, einem Random-Access-Memory oder auf einem Fiash-Memory, abgespeichert ist.

9. Teilnehmerendgerät (3a) eines Kommunikationsnetzwerkes (1, 20), das zum Aufbau einer Konferenzschaltung zwischen mehreren Endgeräten (2, 3, 5, 18) des Kommunikationsnetzwerkes (1, 20) Mittel zur Übermittlung von Informationen über die aufzubauende Konferenzschaltung an eine Rechnereinheit (7) aufweist, welche den Aufbau der Konferenzschaltung steuert, über eine Vermittlungssteile (6, 17) des Kommunikationsnetzwerkes (1, 20) Kommunikationsverbindungen zu den an der Konferenzschaitung teilnehmenden Endgeräten (2, 3, 5, 18) aufbaut und nach erfolgreichem Aufbau der Verbindungen die Verbindungen zu der Konferenzschaltung zusammenschaltet, **dadurch gekennzeichnet, dass** die Rechnereinheit (7) Teil des Endgeräts (3a) ist und das Endgerät (3a) die Funktionen der Rechnereinheit (7) ausführt.

10. Endgerät (3a) nach Anspruch 9, **dadurch gekennzeichnet, dass** das Endgerät (3a) Teil eines digitalen Telekommunikationsnetzwerks (1), vorzugsweise eines Telekommunikationsnetzwerks nach dem ISDN (Integrated Services Digital Network) -Standard, ist.

11. Endgerät (3a) nach Anspruch 10, **dadurch gekennzeichnet, dass** das Endgerät (3a) über einen ISDN-Basisanschluss mit dem Telekommunikationsnetzwerk (1) in Verbindung steht.

12. Endgerät (3a) nach Anspruch 10, **dadurch gekennzeichnet, dass** das Endgerät (3a) über einen ISDN-Primärmultiplexanschluss mit dem Telekommunikationsnetzwerk (1) in Verbindung steht.

13. Endgerät (3a) nach Anspruch 9, **dadurch gekennzeichnet, dass** das Endgerät (3a) Teil eines digitalen Telekommunikationsnetzwerks (1), vorzugsweise eines Telekommunikationsnetzwerks nach dem PBX (Private Branch Exchange)-Standard, ist.

14. Endgerät (3a) nach Anspruch 9, **dadurch gekennzeichnet, dass** das Endgerät (3a) Teil eines IP (Internet Protocol)-Kommunlkationsnetzwerks (20) ist.

15. Endgerät (3a) nach einem der Ansprüche 9 bis 14, **dadurch gekennzeichnet, dass** das Endgerät (3a) eine menugesteuerte grafische Benutzeroberfläche als Schnittstelle (13, 15) zu einem Benutzer (14) des Endgeräts (3a) aufweist.

16. Rechnereinheit (7) als Teil eines Kommunikationsnetzwerkes (1, 20), das mehreren Teilnehmerendgeräte (2, 3, 5, 18) und eine Vermittlungsstelle (6, 17) umfasst, wobei die Rechnereinheit (7) den Aurbau einer Konferenzschaltung zwischen mehreren der Endgeräte (2, 3, 5, 18) steuert, Informationen über die aufzubauende Konferenzschaltung über ein erstes Endgerät (3a) empfängt, über die Vermittlungsstelle (6, 17) Kommunikationsverbindungen zu den an der Konferenzschaltung teilnehmenden Endgeräten (2, 3, 5, 18) aufbaut und nach erfolgreichem Aufbau der Verbindungen die Verbindungen zu der Konferenzschaltung zusammenschaltet, **dadurch gekennzeichnet, dass** die Rechnereinheit (7) Teil des ersten Endgeräts (3a) ist und das erste Endgerät (3a) die Funktionen der Rechnereinheit (7) ausführt.

17. Kommunikationsnetzwerk (1, 20) umfassend mehrere Teilnehmerendgeräte (2, 3, 5, 18), eine Rechnereinheit (7) und eine Vermittlungsstelle (6, 17), wobei die Rechnereinheit (7) den Aufbau einer Konferenzschaltung zwischen mehreren der Endgeräte (2, 3, 5, 18) steuert, Informationen über die aufzubauende Konferenzschaltung über ein erstes Endgerät (3a) empfängt, über die Vermittlungsstelle (6, 17) KommunikaLionsverbindungen zu den an der Konferenzschaltung teilnehmenden Endgeräten (2, 3, 5, 18) aufbaut und nach erfolgreichem Aufbau der Verbindungen die Verbindungen zu der Konferenzschaltung zusammenschaltet, **dadurch gekennzeichnet, dass** die Rechnereinheit (7) Teil des ersten Endgeräts (3a) ist und das erste Endgerät (3a) die Funktionen der Rechnereinheit (7) ausführt.
